# EUROPEAN PATENT SPECIFICATION

(11) **EP 1 054 609 B1**
(45) Date of publication and mention of the grant of the patent: **08.10.2003**
(21) Application number: 99903590.0
(22) Date of filing: 10.02.1999
(51) Int. Cl.: A47J 27/00, A47J 36/04

(54) **A COOKING VESSEL**
KOCHGERÄT
USTENSILE DE CUISSON

(30) Priority: 10.02.1998 DK 19198
(43) Date of publication of application: 29.11.2000
(73) Proprietor: Aktiebolaget Electrolux, 105 45 Stockholm (SE)
(72) Inventor: ESKILDSEN, Christian, DK-5591 Gelsted (DK); KRAUSE, Thomas, DK-2100 Copenhagen Oe (DK)
(74) Representative: Svahn, Göran
(86) International application number: DK9900062
(87) International publication number: WO99040825

(56) References cited:
- DE-A1- 3 721 200
- DE-A1- 19 641 331
- DE-C1- 4 414 439
- PATENT ABSTRACTS OF JAPAN; & JP 6333671 A (MITSUBISHI MATERIALS CORP) 2 December 1994.

## Description

The invention relates to a cooking vessel for use with induction heating systems.

Three main advantages are known in respect of the use of induction heating for cooktops, 1) the surface may be completely flat and hence easy to clean. 2) the surface does not become hot due to the primary transfer of energy, 3) the cooking vessel does not need to have a plane bottom surface. A further advantage is: the thermal time constant of heating is basically only dependent on the cooking vessel..

In latter years various attempts have been made to integrate the cooktop in a kitchen environment by suitable choice of colours and other styling features. Even natural materials, such as marble or wood have been suggested for cooktops, using the induction principle. In this case, magnetic core material is cast in situ in the natural material, either visible from the top or invisibly, and the effect is that a kitchen designer is able to install what looks like an ordinary work surface, but certain areas are able to provide heat to cooking vessels placed thereon. In this construction, the coil-and-core structure is integrated into the kitchen table.

Hitherto, cooking vessels for induction heating have only to been known to fulfil the requirement that the bottom and near bottom sides should be in a material that is magnetically conducting and which presents a certain electrical resistivity. Hence they are normally made as metal vessels, glass vessels laminated on the outside with metal or enameled metal vessels. In stylish homes there is a requirement that kitchen utensils and cooking implements can be designed to fit with requirements of style, sometimes at variance with functionality. However, possibly due to the relatively recent introduction of induction heating (as compared to century-old traditional cooking), cooking vessels are still made in a manner which closely resembles the requirements of high heat tolerance known from traditional heat sources using heat conduction (resistance heating, hotplates), thermal radiation (gas, resistance heating or halogen lamps) or convection (gas). The special advantages of induction heating outlined above have had no influence on the design of cooking vessels outside the forms mentioned above.

DE-C1-4414439 discloses a cooking vessel for induction heating in the form of a shallow dish. At the bottom outer surface of the dish a heating layer is provided which is adapted to heat the dish by induction.

It has been determined that it is possible to obtain the functionality of induction heating with cooking vessels which fulfil any interior decorator's requirements as regards choice of material and general looks. This obtained in a cooking vessel according to the invention which is particular in that it comprises an inner container surrounded by an outer container, wherein the inner container constitutes the heating means and is made from a material that is magnetically conducting and which presents an electrical resistivity commensurate with induction heating, and the outer container is made from an electrically insulating material.

In an embodiment of the invention the outer container is furthermore made in a thermally insulating material. In this manner the cooking vessel may be handled without the need for insulating gloves or similar protective devices. The embodiment has a particular advantage that the vessel will conserve the heat generated in the inner container, and hence keep the temperature of the food for a prolonged period. This provides a hitherto unknown functionality.

In a further embodiment of the invention the material is wood. This has the advantage that an aestatically pleasing cooking vessel may be provided which corresponds to a wooden cooktop and other work surfaces in a kitchen.

A further advantageous embodiment is particular in that the lower surface of the outer container is dimpled. This means that although the skilled person will generally provide a thin bottom for the outer container in order not to make the air gap inordinately large, a decrease in thermal losses may still be obtained by creating a layer of air below the cooking vessel.

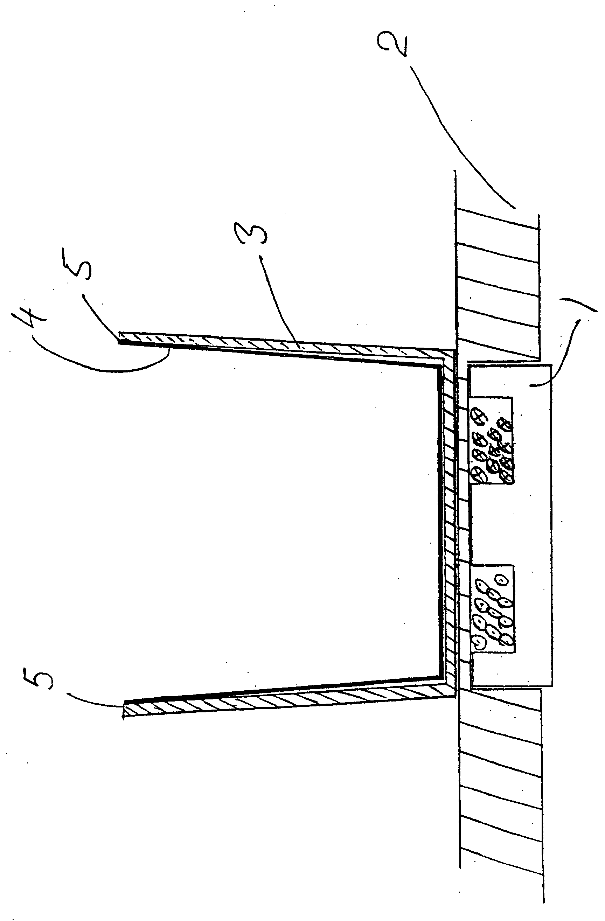

The invention will be further described in the following with reference to the drawing which shows a cooking vessel according to the invention placed on an induction heating coil structure embedded in a work-table.

An induction heating coils structure 1 is embedded in a worktable 2. and a cooking vessel 3 is placed directly over it on the top surface of the worktable 2. The cooking vessel consists of an outer container 3 which encloses an inner container 4 in a material, typically iron or other ferromagnetic material. Particular caulking and food tolerant materials may be provided at the junction 5 between the two containers. In this particular embodiment the outer container 3 is made in wood which has both electrical and thermal insulating properties. The wood may be turned from a solid piece or heat shaped according to Thonet principles. Another method would be to use a plywood construction with the outer veneer in the same wood type as the worktable. Lids for such cooking vessels may be in lively colours in a plastic material or in a moisture-proofed wooden material.

## Claims

1. A cooking vessel for use with induction heating systems and provided with heating means adapted to generate heat under the influence of a magnetic field, **characterized in that** the cooking vessel comprises an inner container (4) surrounded by an outer container (3), wherein the inner container (4) constitutes the heating means and is made from a material that is magnetically conducting and which presents an electrical resisitivity commensurate with induction heating, and the outer container (3) is made from an electrically insulating material.

2. A cooking vessel according to claim 1, **characterized in that** the outer container (3) is furthermore made in a thermally insulating material.

3. A cooking vessel according to claim 2, **characterized in that** the material is wood.

4. A cooking vessel according to claim 2 or claim 3, **characterized in that**: the lower surface of the outer container (3) is dimpled.

## Patentansprüche

1. Kochgefäß zur Verwendung mit Induktionserwärmungssystemen und mit Erwärmungsmitteln versehen, die geeignet sind, unter dem Einfluss eines Magnetfeldes Wärme zu erzeugen, **dadurch gekennzeichnet, dass** das Kochgefäß einen von einem Außenbehälter (3) umschlossenen Innenbehälter (4) umfasst, wobei der Innenbehälter (4) das Heizmittel konstituiert und aus einem Material besteht, das magnetisch leitet und einen der Induktionserwärmung angemessenen elektrischen Widerstand aufweist, und dass der Außenbehälter (3) aus einem elektrisch isolierenden Material gefertigt ist.

2. Kochgefäß nach Anspruch 1, **dadurch gekennzeichnet, dass** der Außenbehälter (3) des weiteren aus einem wärmeisolierenden Material gefertigt ist.

3. Kochgefäß nach Anspruch 2, **dadurch gekennzeichnet, dass** das Material Holz ist.

4. Kochgefäß nach Anspruch 2 oder 3, **dadurch gekennzeichnet, dass** die untere Fläche des Außenbehälters (3) vertieft ist.

## Revendications

1. Récipient de cuisson destiné à être utilisé avec des systèmes de chauffage par induction et muni de moyens de chauffage adaptés pour générer de la chaleur sous l'effet d'un champ magnétique, **caractérisé en ce que** le récipient de cuisson comprend un conteneur interne (4) entouré d'un conteneur externe (3), dans lequel le conteneur interne (4) constitue les moyens de chauffage et est fait d'un matériau qui est magnétiquement conducteur et présente une résistivité électrique adéquate pour le chauffage par induction, et le conteneur externe (3) est fait d'un matériau électriquement isolant.

2. Récipient de cuisson selon la revendication 1, **caractérisé en ce que** le conteneur externe (3) est fait en outre d'un matériau thermiquement isolant.

3. Récipient de cuisson selon la revendication 2, **caractérisé en ce que** le matériau est du bois.

4. Récipient de cuisson selon la revendication 2 ou la revendication 3, **caractérisé en ce que** la surface inférieure du conteneur externe (3) présente des bossages.
